# EUROPEAN PATENT APPLICATION

(11) **EP 4 120 075 A1**
(43) Date of publication of application: **18.01.2023**
(21) Application number: 21186013.5
(22) Date of filing: 16.07.2021
(51) Int. Cl.: G06F 9/455

(54) **DEVICES AND METHODS FOR NETWORK-RELATED EVENTS PROCESSING**

(71) Applicant: Nokia Technologies Oy, 02610 Espoo (FI)
(72) Inventor: G N, Sreevivek, 673104 Vadakara (IN); PRAVINCHANDRA BHATT, Rakshesh, 560036 Bangalore (IN); SARTORI, Cinzia, 82049 Pullach (DE); MWANJE, Stephen, 84405 Dorfen (DE)
(74) Representative: Nokia EPO representatives

(57) **Abstract**

A network events processing agent (103-i) configured to :
- receive network-related events configuration inputs from a network events server (105);
- receive network-related data from a network data source (101-i),
- identify one or more network-related events based on the received network-related data and the network-related events configuration inputs ;
- generate a report on network-related events;
- send the report to the network events server (105).

## Description

### TECHNICAL FIELD

**.** Various example embodiments relate generally to devices and methods for the processing of network-related events.

### BACKGROUND

**.** A data network is a system designed to transfer data from one network element to one or more network elements via data switching, transmission media, and system controls. Hardware and/or software resources can be deployed in the data network for data storage and/or processing.

**.** Exemplary network elements in wireless data networks comprise user equipments, base stations, network controllers, gateways, core network elements, network management systems, and network automation systems.

**.** An event designates anything that happens or is contemplated as happening.

**.** In data networks, network-related events include the events that happen at the network elements operable in the data networks and the events related to the operation of the data networks. For example, in a typical wireless data network, network-related events can occur at the base stations, the network controllers, the gateways, or the core network elements or can characterize the functionning of such network elements.

**.** Network-related events may occur at a network element due to an internal process within the network element or due to an external actor that triggers an event on the network element. Such events can be triggered by the network management systems responsible for the management and orchestration of the network elements or by the network automation systems responsible for automating network optimization operations.

**.** Information provided by the network-related events is essential to take correct event-driven decisions and to provide insights that can be used for the optimization of the network for operational and cost efficiency. In particular, information provided by the network-related events can be critical in several applications where event-driven decisions and actions need to be taken in real-time to find out irregularities and prevent undesired scenarios.

**.** Data analytics enables converting analog raw data generated by network elements into insights that can be processed, interpreted and used for detailed analysis.

**.** For network-related events processing, data analytics is applied on the raw network data as generated by the network elements to come up with predictions of network-related events and statistical insights. Accordingly, the raw network data as generated by the network elements is collected and stored in large databases. Stored raw data is then loaded and used by network management services or functions or applications to derive insights and decisions. For example, in a typical wireless communication network, performance measurements and fault reports delivered by the wireless network elements are collected at the network management system and then copied to a centralized self organizing network system for processing.

**.** When dealing with network data, such data analytics faces several challenges. A first challenge relates to the information density of the stored row data. Indeed, the stored raw data has a low information density since only a small set of stored data includes the events of interest. Thus, a large amount of data needs to be stored to enable finding useful events, which requires huge storage resources that can impose huge financial burden on the network service provider. The second challenge relates to the events prediction accuracy that depends upon the amount and the kind of available historical data and requires storage and processing resources that increase as the amount of stored raw data increases.

.Such challenges need to be overcome to enable supporting services, functions and applications that require long period storage and low-complexity processing of useful network-related events data.

**.** There is accordinlgy a need for devices and methods for enhanced generation and processing of network-related events in data networks.

### SUMMARY

. The scope of protection is set out by the independent claims. The embodiments, examples and features, if any, described in this specification that do not fall under the scope of the protection are to be interpreted as examples useful for understanding the various embodiments or examples that fall under the scope of protection.

. In a first aspect, there is provided a network events processing agent configured to :
- receive network-related events configuration inputs from a network events server;
- receive network-related data from a network data source ;
- identify one or more network-related events based on the received network-related data and the network-related events configuration inputs ;
- generate a report on network-related events;
- send the report to the network events server.

. In a second aspect, there is provided a network events server configured to :
- send network-related events configuration inputs to one or more network event processing agents;
- receive, from the one or more network event processing agents one or more reports on network-related events, the reports on network-related events being generated by the network event processing agents from network-related data received from one or more network data sources according to the network-related events configuration inputs;
- perform one or more processing operations on the one or more reports on network-related events to provide processed reports on network-related events.

. The processing operation may comprise data aggregation, data de-duplication, and/or data categorisation.

. The processing operation may use a machine learning algorithm.

. The network-related event may be a metric threshold event generated when the network-related data comprises values of a measured metric that cross a predefined metric threshold.

. The network-related events configuration inputs associated with the metric threshold event may comprise information related to the network-related event and information related to the measured metric.

. The information related to the network-related event may comprise an event identifier and the network data sources on which the network-related event is monitored.

. The information related to the measured metric may comprise a monitored metric, a monitoring period, an event crossing condition, and a predefined metric threshold.

**.** The network-related event may be an object status change event generated when the network-related data indicate a status change on the network data source.

**.** The network events configuration inputs associated with the object status change event may comprise information related to the network-related event and information related to a status of said network-related event.

**.** The information related to the network-related event may comprise an event identifier and the network data sources on which the event is monitored.

. The information related to the status of the network-related event may comprise an event status indication type and an event status value, the event status indication type indicating if the event is detected or triggered.

. In a third aspect, there is provided a network data source implementing a network events processing agent according to any preceding feature.

**.** The network data source may be operable in a wireless network, the network data source being a user equipment, a base station, a control station, a network management system, or a centralized self-organizing system.

. In a fourth aspect, there is provided a method comprising :
- receiving network-related events configuration inputs from a network events server;
- receiving network-related data from a network data source;
- identifying one or more network-related events based on the received network-related data and the network-related events configuration inputs;
- generating a report on network-related events;
- sending the report to the network events server.

. In a fifth aspect, there is provided a method comprising :
- sending network-related events configuration inputs to one or more network event processing agents;
- receiving, from the one or more network event processing agents, one or more reports on network-related events, the reports on network-related events being generated by the network event processing agents based on network-related data received from one or more network data sources and on the network-related events configuration inputs;
- performing one or more processing operations on the one or more reports on network-related events to provide processed reports on network-related events.

. In a sixth aspect, there is provided an events database configured to store processed reports on network-related events.

. In a seventh aspect, the processed reports on network-related events are used as training data to train machine learning-based algorithms.

. In an eighth aspect, there is provided a data structure for storage of data related to a metric threshold event within a computer system, the data structure comprising :
- a first data element representing an event identifier ;
- a second data element representing one or more network data sources on which the metric threshold event is monitored ;
- a third data element representing a monitored metric ;
- a fourth data element representing a monitoring period ;
- a fifth data element representing an event crossing condition, and
- a sixth data element representing a predefined metric threshold.

. According to a ninth aspect, there is provided a data structure for storage of data related to a status change event within a computer system, the data structure comprising :
- a first data element representing an event identifier ;
- a second data element representing one or more network data sources on which the status change event is monitored ;
- a thrid data element representing an event status indication type indicating if said event is detected or triggered.

. Advantageously, exemplary embodiments enable faster preprocessing, longer storage, and enhanced network-related events predictions.

. Advantageously, exemplary embodiments enable converting the raw network data generated by the network elements into reports on network-related events that have the same information value as the raw network data.

. Advantageously, exemplary embodiments enable facilitated storage of reports on network-related events for longer periods.

. Advantageously, exemplary embodiments enable better and larger system level events predictions and statistical insights generation.

. Advantageously, exemplary embodiments enable identifying and storing rich events information by discarding the unnecessary raw network data. The stored events information provide adequate historical information required by data analytics. In particular, the stored events information enable minimizing the amount of historical data needed to be stored for use as training data in machine learning-based data analytics.

. Advantageously, exemplary embodiments enable minimizing the storage and processing costs involved in network-related events management.

**.** Further advantages will become clear to the skilled person upon examination of the drawings and the detailed description.

### BREIEF DESCRIPTION OF THE DRAWINGS

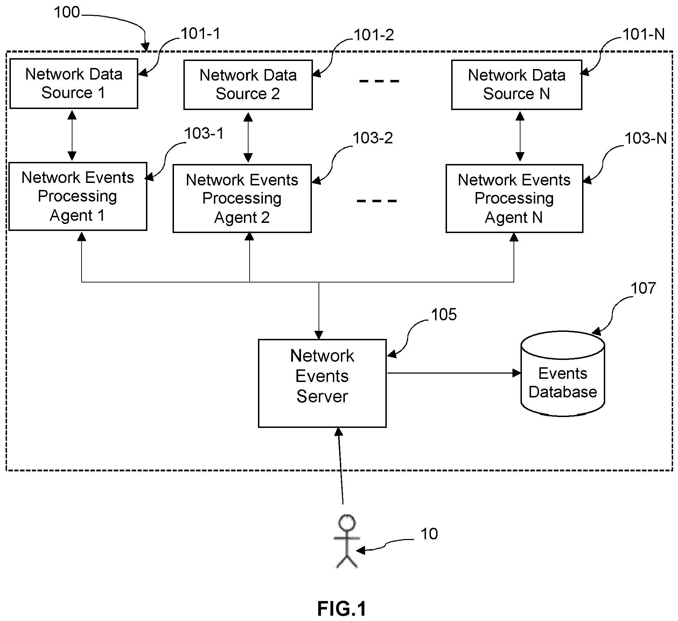

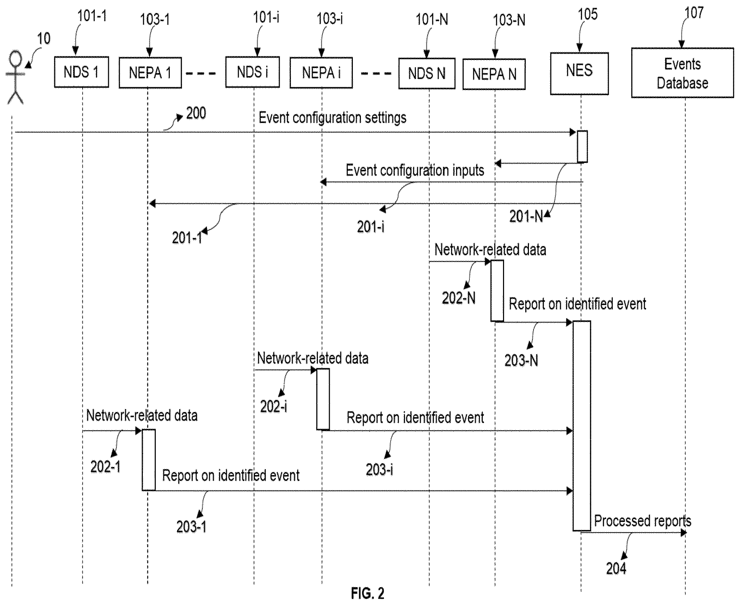

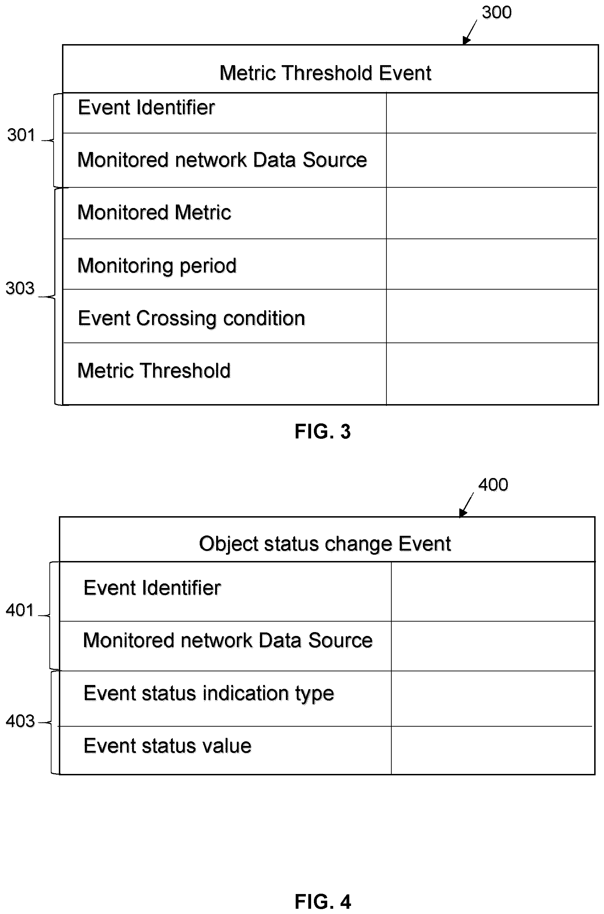

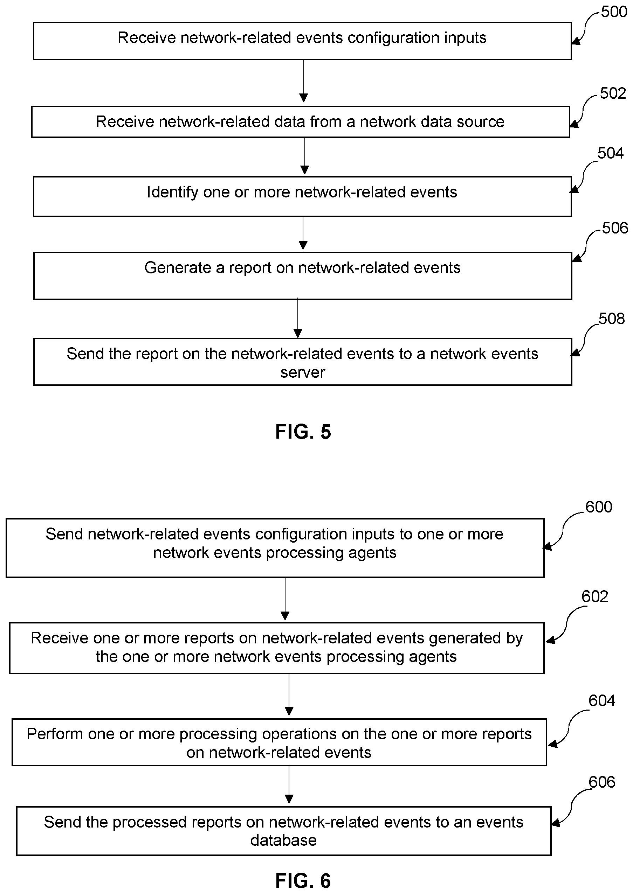

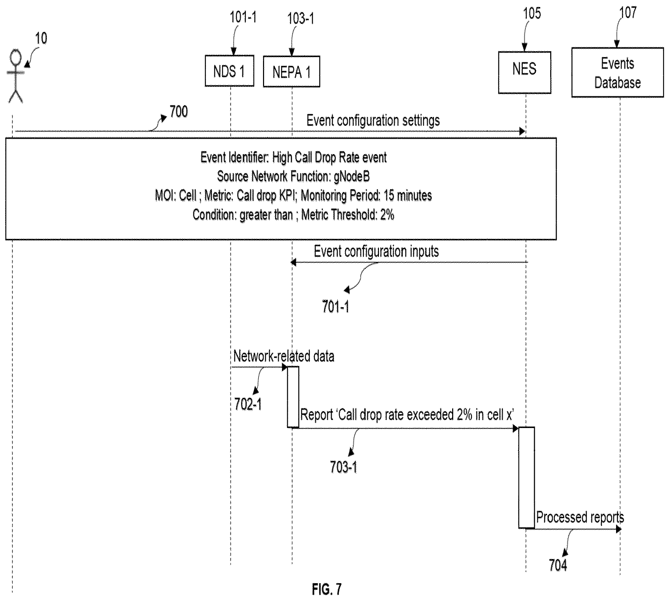

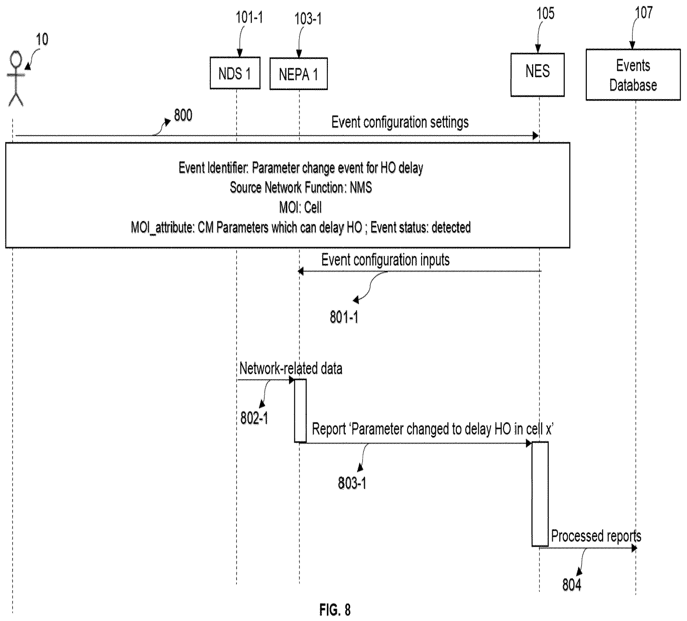

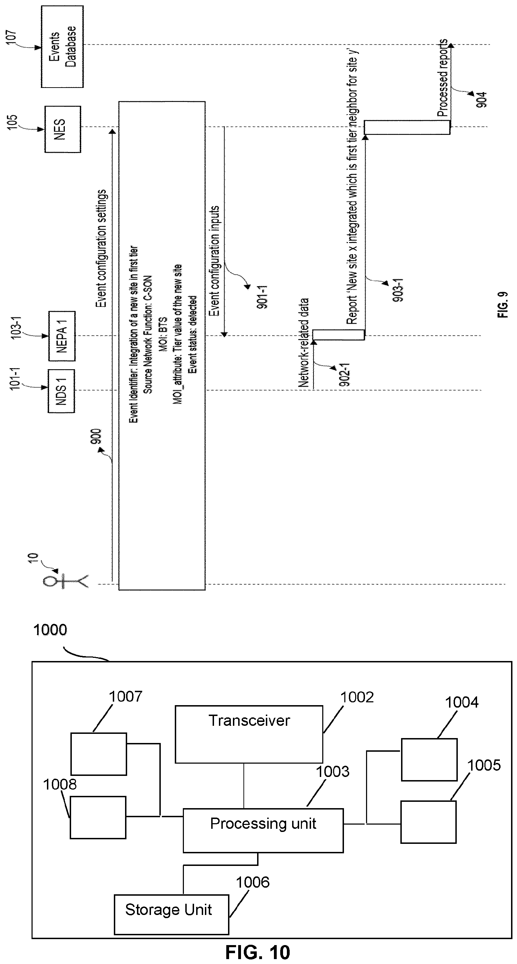

**.** The accompanying drawings, which are incorporated in and constitute a part of this specification, illustrate example embodiments together with the general description given above, and the detailed description given below.
**.** FIG. 1 is a block diagram illustrating an exemplary network implementing network events processing agents and a network events server, according to some embodiments.
**.** FIG. 2 is a connection flow illustrating the generation and processing of network-related events in a data network.
**.** FIG. 3 is a block diagram illustrating an exemplary data structure of metric threshold events.
**.** FIG. 4 is a block diagram illustrating an exemplary data structure of object status change events.
**.** FIG.5 is a flowchart depicting a method for generating reports on network-related events, according to some embodiments.
**.** FIG.6 is a flowchart depicting a method for processing reports on network-related events, according to some embodiments.
**.** FIG. 7 is a connection flow illustrating an exemplary implementation of the methods for generating and processing reports on network-related events, according to other some embodiments related to metric threshold events monitored in a wireless data network.
**.** FIG. 8 is a connection flow illustrating an exemplary implementation of the methods for generating and processing reports on network-related events, according to other embodiments related to object status change events monitred by a network management system in a wireless data network.
**.** FIG. 9 is a connection flow illustrating an exemplary implementation of the methods for generating and processing reports on network-related events, according to some embodiments related to object status change events monitored by a centralized self-organizing network system in a wireless data network.
. FIG. 10 is a block diagram illustrating the structure of a network element operating in a data network, according to some embodiments.

. It should be noted that these figures are intended to illustrate the general characteristics of devices, methods, and structures utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

. Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

. Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

. Exemplary embodiments provide devices, methods, and computer program products enabling the generation and processing of reports on network-related events from raw network data generated in a data network by one or more network data sources.

. Devices, methods, and computer program products according to various exemplary embodiments may be implemented in many types of data networks used for data collection and/or storage and/or processing and/or transmission.

. FIG. 1 illustrates an exemplary data network 100 in which exemplary embodiments may be implemented. The data network 100 may be a digital system part of a communication system, a data processing system, or a data storage system. Exemplary digital systems comprise, without limitations:
- communication systems (e.g. radio communication systems, wireless communication systems, optical fiber-based communication systems, optical wireless communication systems, satellite communication systems);
- storage systems (e.g. cloud computing systems);
- integer programming systems (e.g. computing systems, quantum computing systems);
- positioning systems (e.g. Global positioning systems or GPS, Global Navigation Satellite Systems or GNSS).

. According to some embodiments, the data network 100 may be:
- wired (e.g. optical fiber-based networks);
- wireless (e.g. radio communication networks);
- acoustic (e.g. underwater acoustic communication systems);
- molecular (used for example in underground structures such as tunnels and pipelines).

. In an exemplary application to wired data networks, the data network 100 may be a computer networking system in which one or more network data sources 101-i are configured to operate in a wired network. Exemplary network data sources 101-i adapted to such applications comprise computers, routers or switches connected to a small or large area wired network. Any type of physical cable may be used in such wired data network to ensure the transfer of data between the devices connected to the wired network comprising the one or more network data sources 101-i.

. In another application to wireless data networks, the data network 100 may be any wireless network involving any type of wireless propagation medium suitable for this type of connectivity. Exemplary wireless communication networks comprise, without limitation, ad-hoc wireless networks used in local area communications, wireless sensor networks, and radio communication networks (e.g. Long Term Evolution or LTE, LTE-advanced, 3G/4G/5G and beyond). In such applications, the one or more network data sources 101-i may be any type of fixed or mobile wireless device/system/object configured to operate in a wireless environment. The one or more network data sources 101-i may be remotely monitored and/or controlled. The one or more network data sources 101-i may be equipped with one or more transmit antennas and one or more receive antennas.

. According to some embodiments in application to wireless networks, the network data sources 101-i comprises, without limitations:
- user equipments (e.g. laptops, tablets, mobile phones, robots, Internet of Things (loT) devices);
- base stations (e.g. cellular base stations like eNodeB in LTE and LTE-advanced networks and gNodeB used in 5G networks, and femtocells used at homes or at business centers);
- control stations (e.g. radio network controllers, base station controllers, network switching subsystems);
- network management systems responsible of the management and orchestration of the network elements operable in the data network 100;
- centralized self-organizing systems (C-SON).

. Exemplary applications to wireless data networks comprise Machine-To-Machine (M2M), Device-To-Device (D2D) and loT (for example vehicle-to-everything communications) involving networks of physical devices, machines, vehicles, home alliances and many other objects connected to each other and provided with a connectivity to the Internet and the ability to collect and exchange data without requiring human-to-human or human-to-computer interactions. In exemplary loT applications, the data network 100 may be a wireless loT network representing low energy power-consumption/long battery life/low-latency/low hardware and operating cost/high connection density constraints such as low-power wide area networks and low-power short-range loT networks. The data network 100 may be any wireless network enabling loT in licensed or license-free spectrum. Exemplary wireless technologies used in such applications may comprise:
- short range wireless networks (e.g. Bluetooth mesh networking, Light-Fidelity, Wi-Fi^{™}, and Near-Field communications);
- medium range wireless networks (e.g. LTE-advanced, Long Term Evolution-Narrow Band, NarrowBand loT), and
- long range wireless networks (e.g. Low-Power Wide Area Networks (LPWANs), Very small aperture terminal, and long-range Wi-Fi^{™} connectivity).

. Exemplary applications of M2M and loT applications comprise, without limitation:
- consumer applications (e.g. Internet of Vehicles, home automation, smart cities, wearable technologies, and connected health), and
- commercial applications (e.g. digitalized healthcare connecting medical resources and healthcare services in which special monitors and sensors may be used to enable remote health monitoring and emergency notifications, smart traffic control, and road assistance).

. According to some embodiments in application to wireless data networks, the one or more network data sources 101-i are any physical system/device/object provided with the required hardware and/or software technologies enabling wireless communications and transfer of data or operational signals or messages to one or more network elements in the data network 100.

. In another application to optical fiber networks, the data network 100 may be any data network in which any optical fiber link is designed to carry data over short or long distances. Exemplary applications using optical fiber links over short distances comprise high-capacity networks such as data center interconnections. Exemplary applications using optical fiber links over long distances comprise terrestrial and transoceanic transmissions. In such applications, network data generated by the network elements operable in the network data 100 may be carried by optical signals polarized according to the different polarization states of the optical fiber. The optical signals propagate along the fiber-based link according to one or more propagation modes.

. Exemplary applications of optical fiber data networks comprise, without limitation, aerospace and avionics, data storage (e.g. in cloud computing systems, automotive, industry, and transportation). Such applications may involve transfer of voice (e.g. in telephony), data (e.g. data supply to homes and offices known as fiber to the home), images or video (e.g. transfer of internet traffic), or connection of networks (e.g. connection of switches or routers and data center connectivity in high-speed local area networks). In such applications, the one or more network data sources 101-i may be any optical line terminal integrated for example at the provider's central office or an optical network terminal deployed at the customer premises.

. In another application to hybrid networks, the data network 100 may comprise wireless and optical connectivities between the network elements operable in the data network 100. For example, the data network 100 may be a hybrid optical-wireless access network in which a wireless base station sends data to a wireless gateway through an optical network unit. An exemplary architecture of a hybrid optical-wireless network comprises an integration of Ethernet Passive Optical Networks and wireless broadband communications based on WiMax (Worldwide Interoperability for Microwave Access) standardized in the IEEE 802.16 standards for access networks. In such applications, the one or more network data sources 101-i may be any optical line terminal or optical network unit or any wireless device/system/sub-system/object.

. In another application to optical wireless data networks, connectivity between the network elements operable in the data network 100 may use optical communication in which unguided visible, infrared, or ultraviolet light is used to carry the signals carrying exchanged data (including network-related data and reports on network-related events). Exemplary optical wireless communications technologies comprise visible light communications (VLC), free space optics (FSO) and optical camera communications (OCC). Exemplary applications of optical wireless data networks comprise Optical Internet of Things supported by 5G networks.

. With reference to FIG. 1, the data network 100 comprises one or more network data sources 101-i (also referred to as 'NDS i'), with i varying from 1 to N, N designating a total number of network data sources. The network data source 101-i designates a network element operable in the data network 100 and on which one or more network-related events are to be monitored according to network-related events configuration settings. The monitored events at the network data sources 101-i include the network-related events that occur at the network data sources 101-i and the network-related events that are related to the operation of the network and are captured by the network data sources 101-i.

.A network-related event to be monitored is defined by a set of event attributes comprising at least an event identifier, an event type and the network data source 101-i on which the network-related event is to be monitored.

. Exemplary network-related events comprise, without limitation:
- Key Performance Indicator (KPI) degradation;
- shifts in traffic pattern;
- configuration changes of one or more network elements;
- service outages;
- physical changes such as modifications in antenna tilts and locations;
- rehoming of sites;
- new sites coming up;
- call drop rate more than a certain threshold;
- traffic greater than a certain threshold;
- retainability;
- accessibility;
- cell throughput crossing a certain threshold;
- user throughput crossing a certain threshold;
- latency KPIs crossing a certain threshold, and
- site re-planning events.

. The data network 100 further comprises one or more network events processing agents 103-i (also referred to as 'NEPA i'), with i varying from 1 to N such that each network data source 101-i is configured to communicate with a network events processing agent 103-i.

. According to an embodiment, the network processing agent 103-i is implemented as a physical entity in the network data source 101-i. In other words, the network processing agent 103-i is integrated within the hardware structure of the network data source 101-i.

. According to another embodiment, the network processing agent 103-i is a physical entity implemented in the data network 100 outside the network data source 101-i.

. According to an embodiment, the network processing agent 103-i is implemented by data aggregation and processing functions.

. The data network 100 further comprises a network events server 105 (also referred to as 'NES') configured to communicate with the one or more network events processing agents 103-i, for i varying from 1 to N and to send data to an events database 107.

. According to an embodiment, the network events server 105 is implemented as a standalone function or implemented into a data aggregation function.

. FIG. 2 is a connection flow illustrating the communications between the various network elements operable in the data network 100 for the generation and the processing of reports on network-related events. In the embodiment illustrated in FIG. 2, a network operator 10 (also referred to as an 'authorized user') sends, at step 200, events configuration settings to the network events server 105 in order to specify the network-related events to be monitored in the data network 100.

. According to other embodiments (not illustrated in FIG. 1), the network-related events configuration settings may be defined by an events generator configured for example to automatically generate network-related events configuration settings for example during a testing or a validation phase of the data network 100.

. The network-related events configuration settings define and specify the different attributes of the network-related event(s) to be monitored.

. The network events server 105 is configured to manage the network-related events by configuring the one or more network events processing agents 103-i for i varying from 1 to N to identify and collect events and aggregating the reports generated by the one or more network events processing agents 103-i.

. Based on the received events configuration settings, the network events server 105 determines the network data sources 101-i on which the network-related events are to be monitored. Then the network events server 105 sends, at steps 201-i, the event configuration inputs to the network events processing agents 103-i associated with the network data sources 101-i on which the network-related events are to be monitored.

. When the network events processing agent 103-i receives event configuration inputs from the network events server 105, it triggers a monitoring phase during which it monitors the network data source 101-i. During the monitoring phase, the network events processing agent 103-i receives, at step 202-i, network-related data from the network data source 101-i and identifies the occurrence of the monitored events based on the received network-related data and the event configuration inputs received from the network events server 105.

. The network events processing agent 103-i performs the monitoring until a monitoring stopping condition is reached according to the events configuration inputs. For example, the monitoring stopping condition may correspond to the expiry of a monitoring period or to the identification of an event of interest specified in the events configuration inputs. Then, when the monitoring stopping condition is reached, the network events processing agent 103-i generates a report on the identified network-related events and sends the report on the network-related events to the network events server 105 at step 203-i.

. The network events server 105 is configured to receive the one or more reports on the identified network-related events at steps 203-i, with i varying between 1 and N. The network events server 105 performs one or more processing operations on the received one or more reports to provide processed reports on network-related events.

. In an exemplary embodiment, the network events server 105 is configured to perform a processing operation comprising data aggregation, data de-duplication, and/or data categorization. Such processing operations are used for example to correlate and aggregate the events from two or more network events processing agents to avoid duplication or to mark one event as applicable to multiple network data sources even if it has been generated by one network data source.

. In an exemplary embodiment, the processing operation uses a machine learning algorithm. For example, the machine learning algorithm takes as input the reports on network-related events and delivers as output processed reports on network-related events.

. In an exemplary embodiment, the machine learning algorithm is a supervised machine learning algorithm. Exemplary supervised machine learning algorithms comprise, without limitation, Support Vector Machines (SVM), linear regression, logistic regression, naïve Bayes, linear discriminant analysis, decision trees, k-nearest neighbor algorithm, neural networks, and similarity learning.

. In an embodiment, the network events server 105 sends the processed reports on network-related events to an events database 107 at step 204. The events database 107 is configured to store the processed reports on network-related events. For example, the events database 107 is accessed by any data analytics functions and/or applications and/or services to use the processed reports on network-related events to derive insights or determine event-driven actions.

. In another embodiment, the network events server 105 is configured to send the processed reports on network-related events to any data analytics functions or services or applications requesting access to the processed reports on the identified network-related events.

. In an embodiment, the reports on network-related events are used as training data to train machine learning-based algorithms. Exemplary machine learning-based algorithm comprise supervised machine learning algorithms that map input training data, derived from the processed reports on network-related events, to predicted data using a function that is determined based on labeled data. For example, the supervised machine learning algorithm is, a support vector machine (SVM), a linear regression algorithm, a logistic regression algorithm, a naïve Bayes algorithm, a linear discriminant analysis algorithm, a decision trees algorithm, a k-nearest neighbor algorithm, a neural network, or a similarity learning algorithm.

. In a first example, the network-related event monitored on the network data source 101-i is a metric threshold event generated when the network-related data comprises values of a measured metric (also referred to as 'network metric') that cross a predefined metric threshold.

. Exemplary measured metrics comprise Key Performance Indicators (KPIs), uplink throughput, uplink SINR (Signal to Interference plus Noise Ratio), User Equipment power Headroom, downlink throughput, and downlink Channel Quality Indicator.

. In a second example, the network-related event monitored on the network data source 101-i is an object status change event that is generated when the network-related data indicate a status change on the network data source 101-i.

. The attributes of the network-related events and the network-related events configuration inputs associated with the network-related events depend on the type of the network-related event. For example, the attributes and the configuration inputs are different for metric threshold events or for object status change events.

. The storage of the attributes of the network-related events can use any available data storage technology such as data structures and software objects (e.g. data objects) according to any object-oriented technology.

. Data structures may be any data organization, management and storage format that enables access to and/or modification of stored data. Exemplary data structures comprise arrays, linked lists, records, and objects.

. FIG. 3 is a block diagram illustrating an exemplary data structure 300 used for storage of data (attributes) related to a metric threshold event (stored for example in a computer system). The metric threshold event data structure 300 comprises data fields (also referred to as 'data elements') in which information 301 related to the network-related event and information 303 related to the measured metric are specified. More specifically, the information 301 related to the network-related event comprise:
- a first data element representing an event identifier;
- a second data element representing one or more network data sources 101-i on which the metric threshold event is monitored.

. The information 303 related to the measured metric comprise :
- a third data element representing a monitored metric ;
- a fourth data element representing a monitoring period ;
- a fifth data element representing an event crossing condition, and
- a sixth data element representing a predefined metric threshold.

. The network-related events configuration inputs associated with such a metric threshold event may comprise the attributes related to the metric threshold event according to the data structure illustrated in FIG. 3.

. FIG. 4 is a block diagram illustrating an exemplary data structure 400 used for storage of data (attributes) related to an object status change event (stored for example in a computer system). The object status change event data structure 400 comprises data fields in which information 401 related to the network-related event and information 403 related to the status change on the monitored network data source are specified. More specifically, the information 401 related to the network-related event comprise:
- a first data element representing an event identifier;
- a second data element representing one or more network data sources on which the status change event is monitored.

**.** The information 403 related to the object status change comprise :
- a third data element representing an event status indication type indicating for example if the event is detected or triggered, and
- a fourth data element representing an event status value.

**.** The event status indication type is a mandatory attribute that can be used by the network events server 105 to configure the event on one or more network events processing agents for which it applies. The event status value is optional. It may be used for some event status cases associated with a value.

**.** For example, in an embodiment in which an object-oriented technology is used for the storage of network events attributes, the software objects are defined as in the 3GPP TS28.622 standard specifications. The present disclosure specifies the semantics of information object class attributes used for metric threshold events and object status change events in a protocol and technology neutral way. It does not define their syntax and encoding.

**.** For the purpose of clarification, Information Object Class (IOC) and Managed Object Instance (MOI) are defined below.

**.** An Information Object Class represents the management aspect of a network resource. It describes the information that can be passed/used in management interfaces. IOC has attributes that represent the properties of the class of objects.

**.** A Managed Object Instance (MOI) is an instance (software object instance) of a Managed Object Class (MOC) representing the management aspects of a network resource. The MOC is a class of a technology specific software objects.

**.** Exemplary Managed Object Instances in a data network for metric threshold events are MOI corresponding to the network elements like base stations, NodeB, eNodeB, gNodeB, cells, antennas, base station controllers (BSCs), and radio network controllers (RNCs).

**.** The object class of metric threshold events is referred to as 'metric threshold events'. This object class represents the network-related events captured when network-related data comprise values of a measured metric that cross a predefined metric threshold.

**.** Inputs to the metric threshold events object class are the values/measurements on a measured metric that are captured at a Managed Object Instance.

**.** The information model for the metric threshold events captures a set of attributes comprising at least:
- the 'Managed Object Instance': represents the Managed Object Instance on which the event is identified or registered;
- the 'metric name': represents the metric that is measured;
- the 'monitoring period': represents the period for which the metric is measured and compared with the metric threshold;
- the 'condition': represents the kind of metric threshold crossing that is identified. Allowed values are 'less than', 'equal than', or 'greater than';
- the 'metric threshold': represents the specific value that is crossed.

**.** Examples of metric threshold events captured in application to wireless data networks using the attributes as defined by the object class 'metric threshold events' are given in Table 1 below. In Table 1, the following acronyms denote:
- BTS: Base Transceiver Station;
- NB: NodeB;
- RACH: Random Access Channel;
- RRC: Radio Resource Control;
- NCR: Neighbor Cell Relations.

**.** The object class of object change status network events is referred to as 'object status change events'. This object class represents the network-related events captured when the network-related data comprise information indicating a status object change on the monitored Managed Object Instance. The status of a Managed Object Instance may change due to internal processes within the MOI or due to external actors acting on the MOI. The object status change event may be reported by the MOI or by a process supervising the MOI.

**.** Inputs to the object status change events class are the internal/external processes supervising the MOI.

**.** Exemplary Managed Object Instance in a data network for object status change events are MOI corresponding to the network elements like base stations, NodeB, eNodeB, gNodeB, cells, antennas, base station controllers, and radio network controllers.

**.** The information model for the object status change events object class captures a set of attributes comprising at least:
- the Managed Object Instance: representing the Managed Object Instance on which the event is registered;
- an MOI attribute: representing the specific MOI attribute on which the event is registered, and
- the event status: represents the registered event status. Allowed values comprise 'triggered' and 'detected'.

. Optionally, the information mode for the object status change events object class comprises an attribute designated by an event status value and representing a value associated with the event status.

**Table 1: Examples of Metric Threshold Events**

| Event-creator Function | Event Name | Event description | Input/Metric | MOI | Threshold | Condition | Monitoring Period |
|---|---|---|---|---|---|---|---|
| BTSs; NBs; eNBs; gNBs; BSC; RNC | High Call Drop Rate event | Call Drop Rate more than a configurable threshold | Call Drop Rate | Cell | 2% | greater than | 15 minutes |
| | Low Availability KPIs event | Availability KPIs dropping below a configurable threshold | Availability | Cell | 99% | less than | 30 minutes |
| | Low Retainability KPIs event | Retainability KPIs dropping below a configurable threshold | Retainability | Cell | 98% | less than | 30 minutes |
| | High Traffic event | Traffic greater than a configurable threshold | Cell load / PRB Utilization | Cell | 80% | greater than | 15 minutes |
| | High Incoming call setup rate event | Incoming call setup rate greater than a configurable threshold | RACH Counters AND/OR Paging Counters | Cell | 20000 | greater than | 15 minutes |
| | High RRC Connection Attempt failure rate event | RRC Connection Attempt failure rate exceeding a configurable threshold | RRC Connection Attempt failure rate | Cell | 5% | greater than | 5 minutes |
| | High RACH Decoding failure rate event | RACH Decoding failure percentage exceeding a configurable threshold | RACH Unsuccessful Counters | Cell | 25% | greater than | 15 minutes |
| | Maximum NCRs reached | Number of Neighbor Cell Relations equal to maximum for a cell | Number of NCRs | Cell | 20 | Equal to | NA |
| | Potential Sleeping Cell | Number of RRC Connection Setup Success is ZERO in monitoring period. Useful for sleeping Cell Detection | RRC Connection Setup Success Counter | Cell | 0 | Equal to | 15 Minutes |

**.** Examples of object status change events captured in application to wireless data networks using the attributes as defined by the object class 'object status change events' are given in Table 2 below.

. The object status change events may be defined as specific events or as events types where characteristics of the specific events may be taken as filter values in the events types. For example, instead of specifying a 'site BSC/RNC rehoming event' and a 'site OSS rehoming event', a 'site rehoming event' may be specified with two possible values (SBC/RNC and OSS) for the 'affected unit/parameter' attribute. An event type may be the 'MOI rehoming event' which would apply to other MOIs besides the sites, as illustrated in Table 2.

**Table 2: Examples of Object Status Change Events**

| **Event-creator Function** | **Event Name** | **Event description** | **MOI** | **Affected unit/parameter** | **Change/ value** |
|---|---|---|---|---|---|
| BTSs; NBs; eNBs; gNBs; BSC; RNC; NMS | HW Upgrade event | System Module HW version upgraded | BTS | System Module, Radio Module, ... | HW version |
| | SW Upgrade event | System Software Upgraded | BTS | System Module, Radio Module, ... | SW version |
| | Capability Enablement event | A specific Capability Enabled on the MOI | BTS | Spectrum Sharing | Spectrum Range for affected RATs |
| | New Sector Addition Event | A new Sector getting added to a Site | Cell | Capacity and Coverage | Number of Sectors / Cells |
| NMS | Parameter change event | CM Parameter changes applied for specific network element | Cell | Configuration Parameter | Parameter value |
| | Home status event | MOI (e.g. site) Rehoming | Site | BSC/RNC, OSS | New BSC/RNC/ OSS |
| C-SON, Analytics function | New Site event | New Site Integrated | Site/gNB | C-SON Functions | Optimization Parameters in C-SON |
| | Predicted Congestion by MDAS | Trigger for Load Balancing detected | Cell | C-SON LBO | Mobility Parameter changes |
| | Frequent Handover Failures | Trigger for MRO detected | Cell | C-SON MRO | Handover Parameter Changes |
| | PCI Conflict | PCI conflict detected | Cell | C-SON PCI | PCI Changes |
| | PRACH Conflict | PRACH conflict detected | Cell | C-SON PRACH | PRACH related parameter Changes |
| | NCR Change | New First tier neighbor getting added | Cell | C-SON ANR | NCR Changes |
| | | | | | |
| | Frequency Layer Change | New Frequency Layer added onto a site | BTS | C-SON | Frequency Layer Addition |

. 3GPP SA5 in TS28.622 specifies a threshold monitor which, when activated on a network element, monitors all the metrics on all managed objects under that network element. The threshold monitor then can trigger notifications for events that are captured on that network element. Such threshold monitor needs to be configured manually for each threshold crossing event on each network element.

. In order to monitor object status changes, extension of the 3GPP SA5 specifications (specifically the TS 28.622 specifications) are required. In the present disclosure, an adaptation of the existing data model is provided with the introduction of a new Information Object Class that represents a Status Change Monitor for Managed Objects. The Status Change Monitor class checks for changes in monitored attribute values and generates a notification when that happens. A data type *StatusChangeEvent* defines a single status change event.

. The Status Change Monitor class can be name-contained by *Sub_Network, Managed Element, Managed Function,* or *Management Function.*

. In order to activate Status Change Monitoring, a Management Service (MnS) consumer creates a *StatusChangeMonitor* instance on the MnS producer. For ultimate deactivation of status change monitoring, the MnS consumer should delete the monitor to free up resources on the MnS producer.

**.** For temporary suspension of status change monitoring, the MnS consumer can manipulate the value of the administrative state attribute. The MnS producer may disable status change monitoring as well, for example in overload situations. This situation may be indicated by the MnS producer with setting the operational state attribute to disabled. When monitoring is resumed the operational state may be set again to enabled.

**.** The StatusChangeMonitor IOC includes attributes inherited from Top IOC defined in clause 4.3.29 in the TS28.622 specifications and includes new attributes comprising:
- a new attribute 'administrativeState' which is a mandatory attribute;
- a new attribute 'operationalState' which is a mandatory attribute;
- a new attribute 'StatusChangeEventList' which is a mandatory attribute;
- an attribute 'objectlnstances' which is optional, and
- an attribute 'rootObjectlnstances' which is optional.

**.** The optional attributes 'objectlnstances' and 'rootObjectInstances' allow to restrict the scope for status changes. When the attribute 'objectlnstances' is present, only the object instances identified by this attribute are scoped. When the attribute 'rootObjectInstances' is present, then the subtrees whose root objects are identified by this attribute are scoped. Both attributes may be present at the same time meaning the total scope is equal to the sum of both scopes. Object instances may be scoped by both the 'objectlnstances' and r'ootObjectlnstances' attributes. This shall not be considered as an error by the MnS producer.

**.** Multiple status changes can be defined for multiple performance metric sets in a single monitor using the attribute 'StatusChangeEventList'.

**.** A status change is defined using the attribute 'StatusChangeValue'.

**.** A StatusChangeMonitor creation request shall be rejected if the attribute(s) requested to be monitored is/are not supported by the MnS producer.

**.** Creation and deletion of StatusChangeMonitor instances by MnS consumers is optional; when not supported, StatusChangeMonitor instances may be created and deleted by the system or be pre-installed.

**.** FIG. 5 is a flowchart depicting a method for generating a report on network-related events.

**.** At step 500, network-related events configuration inputs are received from a network events server.

**.** At step 502, network-related data are received from a network data source.

**.** At step 504, one or more network-related events are identified based on the received network-related data and the network-related events configuration inputs.

**.** At step 506, a report on network-related events is generated.

**.** At step 508, the report on network-related events is sent to the network events server.

**.** FIG.6 is a flowchart depicting a method for generating processed reports on network-related events.

**.** At step 600, network-related events configuration inputs are sent to one or more network event processing agents.

**.** At step 602, one or more reports on network-related events are received from the one or more network event processing agents, the reports on network-related events being generated by the network event processing agents based on network-related data received from one or more network data sources and on the network-related events configuration inputs.

**.** At step 604, one or more processing operations are performed on the one or more reports on network-related events to provide processed reports on network-related events.

**.** In an embodiment, the method further comprises a step 606 for sending the processed reports on network-related events to an events database.

**.** Although a flow chart may describe operations as a sequential process, many of the operations may be performed in parallel, concurrently or simultaneously. In addition, the order of the operations may be re-arranged or may sometimes be executed in the reverse order, depending upon the operations involved. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

**.** FIG. 7 is a connection flow illustrating an exemplary implementation of the methods for generating and processing reports on network-related events, according to some embodiments related to metric threshold events in a wireless data network. The network events processing agent 103-1 corresponds to a gNodeB (i.e. corresponds to the network virtual function replacing the gNodeB hardware structure when Network Virtualization is supported).

**.** At step 700, event configuration settings and an event identifier are sent by the network operator 10 to the NEPA 103-1. In this example, the event configuration settings comprise :
- the event Identifier: High Call Drop Rate event
- the Source Network Function: gNodeB
- the MOI: Cell ;
- the (measured) Metric: Call drop KPI
- the monitoring period: 15 minutes
- the Condition: greater than
- the metric threshold: 2%

**.** At step 701, event configuration inputs are sent by the network events server 105 to the NEPA 103-1.

**.** At step 702-1, monitoring of the event of interest specified in the event configuration inputs starts and stops according to the monitoring period specified in the event configuration inputs. The monitoring phase comprises identifying any event based on the network-data received from the corresponding Managed Object Instance and the event configuration inputs.

**.** At step 703-1, an identified event is reported to the network events server 105. More specifically, the event 'call drop rate exceeded 2% in cell x' is reported to the events server 105.

**.** The network server 105 performs one or more operations on the received reports to determine processed reports an sends, at step 704, the processed reports to the events database 107 for storage.

**.** FIG. 8 is a connection flow illustrating an exemplary implementation of the methods for generating and processing reports on network-related events, according to other embodiments related to object status change events monitored by a network management system in a wireless data network. The network events processing agent 103-2 corresponds to a Network Management System (i.e. corresponds to the network virtual function replacing the Network Management System hardware structure when Network Virtualization is supported).

**.** Referring to FIG.8, at step 800, event configuration settings are sent by the network operator 10 to the network events processing agent 103-1. In this example, the event configuration settings comprise :
- the event Identifier: Parameter change event for Hand Over (HO) delay
- the source Network Function: NMS
- the MOI: Cell
- the MOI_attribute: CM Parameters which can delay HO
- the Event status: detected

**.** At step 801-1, event configuration inputs are sent by the network events server 105 to the network events processing agent 103-1.

**.** At step 802-1, monitoring of the event of interest specified in the event configuration inputs starts. The monitoring phase comprises identifying any event based on the network-data received from the corresponding Managed Object Instance and the event configuration inputs.

**.** At step 803-1, an identified event is reported to the network events server 105. More specifically, the event 'Parameter changed to delay HO in cell X' is reported to the network events server 105.

**.** The network events server 105 performs one or more processing operations on the received reports on the identified events to determine processed reports and sends, at step 806 the processed reports to the events database.

**.** FIG. 9 is a connection flow illustrating an exemplary implementation of the methods for generating and processing reports on network-related events, according to some embodiments related to object status change events monitored by a centralized self-organizing network system in a wireless data network. The network events processing agent 103-1 corresponds to a Centralized-Self Organizing Network (i.e. corresponds to the network virtual function replacing the C-SON hardware structure when Network Virtualization is supported).

. At step 900, event configuration settings are sent by the network operator 10 to the network events processing agent 103-1. In this example, the event configuration settings comprise :
- the event Identifier: Integration of a new site in first tier;
- the Source Network Function: C-SON
- the MOI: BTS
- the MOI_attribute: Tier value of the new site
- the event status: detected

. At step 901-1, event configuration inputs are sent by the network events server 105 to the network events processing agent 103-1. The Event configuration inputs are derived from the event configuration settings received at step 900.

. At step 902-1, monitoring of the event of interest starts. The monitoring phase comprises identifying any event based on the network-data received from the corresponding Managed Object Instance and the event configuration inputs.

. At step 903-1, an identified event is reported to the network events server 105. More specifically, the event 'New site x integrated which is first tier neighbour for site y' is reported to the network events server 105.

. The network events server 105 performs one or more operations on the received reports to provide processed reports and sends, at step 904, the processed reports to the events database 107.

. Exemplary embodiments provide a program stored in a computer-readable non-transitory medium, the program comprising instructions stored on the computer-readable storage medium that, when executed by a processor, cause the processor to:
- receive network-related events configuration inputs;
- receive network-related data;
- identify one or more network-related events based on the network-related data and the network-related events configuration inputs ;
- generate a report on network-related events;
- send the report to a network events server.

. It should be appreciated by those skilled in the art that any functions, engines, block diagrams, flow diagrams, state transition diagrams and/or flowcharts herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processing apparatus, whether such computer or processor is explicitly shown.

. Each described computation function, block, step can be implemented in hardware, software, firmware, middleware, microcode, or any suitable combination thereof. If implemented in software, the computation functions, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause an apparatus to perform the necessary tasks. Additionally, the processor, memory and example algorithms, encoded as computer program code, serve as means for providing or causing performance of operations discussed herein.

. In the present description, block denoted as "means configured to" perform a certain function shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

. As used in this application, the term "circuit" or "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

. This definition of "circuit" or "circuitry" applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device. The term circuitry may cover digital signal processor (DSP) hardware, network processor, application specific integrated circuit (ASIC), field programmable gate array (FPGA), etc.

. The "circuit" or "circuitry" may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

. The "circuit" or "circuitry" may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via a radio network (e.g., after being down-converted by radio transceiver, for example).

. As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

. The methods and devices described herein may be implemented by various means. For example, these techniques may be implemented in hardware, software, or a combination thereof. For a hardware implementation, the processing elements of the different network elements operating in the data network 100 can be implemented for example according to a hardware-only configuration (for example in one or more FPGA, ASIC, or VLSI integrated circuits with the corresponding memory) or according to a configuration using both VLSI and Digital Signal Processor (DSP).

. Figure 10 is a block diagram representing an exemplary hardware/software architecture of a device 1000 operating in data network 100 such as the network data sources 101-i, the network events processing agents 103-i and the network events server 105, according to some embodiments. As illustrated, the architecture may include various computing, processing, storage, communication, and displaying units comprising:
- communication circuitry comprising a transceiver 1002 (e.g. wireless or optical transceiver) configured to connect the device 1000 to corresponding links in the data network 100, and to ensure transmission/reception of data and/or signals. The communication circuitry may support various network and air interface such as wired, optical fiber, and wireless networks;
- a processing unit 1003 configured to execute the computer-executable instructions to run the methods and algorithms according to the various embodiments of the invention and perform the various required functions of the device such as events identification, events processing, reports generation, reports processing, network-related data processing (e.g. input/output processing) and any functionalities required to enable the device 1000 to operate in the data network 100 according to the various embodiments. The processing unit 1002 may be a general purpose processor, a special purpose processor, a DSP, a plurality of microprocessors, a controller, a microcontroller, an ASIC, an FPGA circuit, any type of integrated circuit, and the like;
- a power source 1004 that may be any suitable device providing power to the device 1000 such as dry cell batteries, solar cells, and fuel cells;
- a localization unit 1005 such as a GPS chipset implemented in applications that require information indicating the location of the device 1000;
- a storage unit 1006 possibly comprising a random access memory (RAM) or a read-only memory used to store processed data (e.g. network-related data, reports on network-related events) and any data required to perform the functionalities of the device 1000 according to the embodiments;
- Input peripherals 1007;
- Output peripherals 1008 comprising communication means such as displays enabling for example man-to-machine interaction between the device 1000 and the data network 100 administrator for example for configuration and/or maintenance purposes.

. The architecture of the device 1000 may further comprise one or more software and/or hardware units configured to provide additional features, functionalities and/or network connectivity.

. Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

. It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

. The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A network events processing agent (103-i) configured to :
- receive network-related events configuration inputs from a network events server (105);
- receive network-related data from a network data source (101-i),
- identify one or more network-related events based on said received network-related data and said network-related events configuration inputs ;
- generate a report on network-related events;
- send said report to said network events server (105).

2. A network events server (105) configured to :
- send network-related events configuration inputs to one or more network event processing agents (103-i);
- receive, from said one or more network event processing agents (103-i) one or more reports on network-related events, the reports on network-related events being generated by the network event processing agents (103-i) from network-related data received from one or more network data sources (101-i) according to said network-related events configuration inputs;
- perform one or more processing operations on said one or more reports on network-related events to provide processed reports on network-related events.

3. The network events server (105) of claim 2, wherein the processing operation comprises data aggregation, data de-duplication, and/or data categorisation.

4. The network events server (105) of any preceding claim 2 to 3, wherein the processing operation uses a machine learning algorithm.

5. The network events processing agent (103-i) as claimed in claim 1 or the network events server (105) as claimed in any preceding claim 2 to 4, wherein the network-related event is a metric threshold event generated when the network-related data comprises values of a measured metric that cross a predefined metric threshold.

6. The network events processing agent (103-i) as claimed in claim 5 or the network events server (105) as claimed in claim 5, wherein the network-related events configuration inputs associated with the metric threshold event comprise information related to said network-related event and information related to said measured metric.

7. The network events processing agent (103-i) as claimed in claim 6 or the network events server (105) as claimed in claim 6, wherein said information related to said network-related event comprise an event identifier and the network data sources (101-i) on which said network-related event is monitored.

8. The network events processing agent (103-i) as claimed in claim 6 or the network events server (105) as claimed in claim 6, wherein said information related to said measured metric comprise a monitored metric, a monitoring period, an event crossing condition, and a predefined metric threshold.

9. The network events processing agent (103-i) as claimed in claim 1 or the network events server (105) as claimed in any preceding claim 2 to 4, wherein the network-related event is an object status change event generated when the network-related data indicate a status change on the network data source (101-i).

10. The network events processing agent (103-i) as claimed in claim 9 or the network events server (105) as claimed in claim 9, wherein the network events configuration inputs associated with the object status change event comprise information related to said network-related event and information related to a status of said network-related event.

11. The network events processing agent (103-i) as claimed in claim 10 or the network events server (105) as claimed in claim 10, wherein said information related to said network-related event comprise an event identifier and the network data sources (101-i) on which said event is monitored.

12. The network events processing agent (103-i) as claimed in claim 11 or the network events server (105) as claimed in claim 11, wherein said information related to the status of said network-related event comprise an event status indication type and an event status value, said event status indication type indicating if said event is detected or triggered.

13. A network data source (101-i) implementing a network events processing agent (103-i) as claimed in any preceding claim 1 and 5 to 12.

14. A network data source (101-i) as claimed in claim 13, wherein the network data source (101-i) is operable in a wireless network (100), the network data source (101-i) being a user equipment, a base station, a control station, a network management system, or a centralized self-organizing system.

15. A method comprising :
- receiving (200) network-related events configuration inputs from a network events server;
- receiving (202) network-related data from a network data source ;
- identifying (204) one or more network-related events based on said received network-related data and said network-related events configuration inputs ;
- generating (206) a report on network-related events;
- sending (208) said report to said network events server.
